# EUROPEAN PATENT SPECIFICATION

(11) **EP 4 023 530 B1**
(45) Date of publication and mention of the grant of the patent: **19.02.2025**
(21) Application number: 20857806.2
(22) Date of filing: 26.04.2020
(51) Int. Cl.: B62D 5/04

(54) **IMPROVED ELECTRIC POWER STEERING DRIVING MODULE**
VERBESSERTE ANTRIEBSMODULE FÜR ELEKTRISCHE SERVOLENKUNG
MODULE D'ENTRAÎNEMENT DE DIRECTION ASSISTÉE ÉLECTRIQUE AMÉLIORÉ

(30) Priority: 30.08.2019 CN 201921429985 U
(43) Date of publication of application: 06.07.2022
(73) Proprietor: Bosch Huayu Steering Systems Co., Ltd., Shanghai 201821 (CN)
(72) Inventor: CHEN, Haiming, Shanghai 201821 (CN)
(74) Representative: Patentanwälte Bressel und Partner mbB
(86) International application number: PCT/CN2020/086921
(87) International publication number: WO 2021/036311

(56) References cited:
- WO-A1-2018/221726
- CN-A- 104 724 162
- CN-A- 105 322 724
- CN-A- 108 137 084
- CN-A- 108 290 603
- US-A1- 2011 018 374
- US-A1- 2013 088 128
- US-A1- 2018 093 698
- US-A1- 2019 103 788

## Description

### TECHNICAL FIELD

The present application relates to an electric power steering drive module; in particular, it relates to an electric power steering drive module for a column-type electric power system. Also, it relates to an electrical power steering system and a vehicle including an electric power steering drive module.

### BACKGROUND

For an electrical power steering system (EPS), an input shaft is connected to a steering wheel in a drivetrain. Accordingly, in the case that the steering wheel is turned (e.g., by a driver), the input shaft drives a torsion bar to turn at an angle relative to an output shaft. A torque sensor senses the angle and sends a signal to an electronic control unit (ECU). Based on this steering wheel torque signal and an overall vehicle signal, the ECU sends a corresponding control signal to a power amplifier module such that the power module and three-phase circuits provide power to a motor in a certain mode for driving the motor. Motor torque is amplified by a worm and worm wheel and transmitted to the output shaft such that the motor provides power assistance in a desired manner (e.g., as intended by the driver).

Conventionally, the ECU is arranged separately from the motor, i.e., the motor and the ECU are assembled separately to a servo housing, and then the motor is connected to the ECU with resistance welding or screws, etc.

However, there are problems in this arrangement of motor and ECU. This brings inconvenience to fault detection and/or after-sales replacement. The reason is that for this conventional arrangement of the module, if an individual part of the module is to be substituted, the whole system needs replacement. The cost of such an operation is very high.

Further, a separate RPS sensor module is required to be installed on the motor to detect angles of rotor rotation of the motor. However, the total space occupied by the ECU, the RPS sensor module, and the motor is relatively large and the cost of parts is high. This heavier arrangement is not in the trend of a lightweight requirement for automobiles and hard to meet the need of customers seeking light-weight.

Document US2011/018374A1 shows an example of a prior art electric power steering drive module according to the preamble of claim 1.

Therefore, it is desired to provide an improved electric power steering drive module to solve at least one of the above problems.

### SUMMARY

An objective of this application is to solve the above-mentioned problem of separate arrangement of ECU and motor, and resulting problems of higher weight, larger space occupation and higher cost.

Accordingly, at one aspect of the present application, provided is an electric power steering drive module comprising: a motor comprising a housing, stator coils disposed inside the housing, a motor shaft disposed at the center of the stator coils, and motor three-phase terminals leading from the stator coils towards a side of the motor and being exposed outside the housing,
an electronic control unit base fixed to the motor at the side of the exposed terminals, wherein the electronic control unit base includes a guiding recess, a magnet mounting through-hole, a capacitor mounting hole, an inductor mounting hole, and an electronic control unit connector slot disposed therein,
an electronic control unit circuit board assembly fixed to the electronic control unit base at the opposite side of the motor and includes an electronic control unit circuit board, and a guide, a Rotor Position Sensor chip, a capacitor, an inductor, and an electronic control unit connector fixed to the lower surface of the electronic control unit circuit board; and
a magnet,
wherein the motor shaft is configured to pass through the magnet mounting through-hole and the magnet is snapped onto the end of the motor shaft, and
wherein the capacitor is configured to be tightly mounted in the capacitor mounting hole, the inductor is configured to be tightly mounted in the inductor mounting hole, and the electronic control unit connector is configured to be fitted tightly in the electronic control unit connector slot.

In one possible embodiment, the electric power steering drive module further comprises: an electronic control unit top-cover fixed to the electronic control unit circuit board assembly.

In one possible embodiment, the electric power steering drive module further comprising: an electronic control unit top-cover fixed to the electronic control unit base.

In one possible embodiment, the electronic control unit circuit board assembly is fixed to the electronic control unit base by the electronic control unit connector being closely fitted to the electronic control unit connector slot.

In one possible embodiment, the magnet is configured to be aligned with the Rotor Position Sensor chip, wherein the Rotor Position Sensor chip obtains the angular error of the motor rotor angle by controlling the distance between the magnet and the Rotor Position Sensor chip.

In one possible embodiment, the electronic control unit circuit board comprises three motor pinholes and the guide comprises three pilot holes, and wherein the three motor pinholes are configured to be respectively aligned with each of the three pilot holes.

In one possible embodiment, the three ends of the terminals are configured to pass through the guiding recess, the pilot holes and the motor pinholes respectively, for being exposed outside the electronic control unit circuit board assembly.

In one possible embodiment, the guide comprises: fixing tabs disposed at two ends of the backside of the guide respectively; and mounting support surfaces disposed on the backside of the guide and positioned between the fixing tabs, wherein the guide is fixed with its backside to the electronic control unit circuit using the fixing tabs and the mounting support surfaces.

Further, at another aspect of the present application, provided is an electrical power steering system comprising an electric power steering drive module as above.

Further, at yet another aspect of the present application, provided is a vehicle comprising an electrical power steering system as above.

The electric power steering drive module according to the present application has at least the following advantages: simplifying motor structure by integrating constructing, efficient usage of space, and cost-saving. This facilitates the layout of the whole vehicle.

### BRIEF DESCRIPTION OF THE DRAWINGS

**Fig. 1** shows a cross-sectional view of an improved electric power steering drive module according to an embodiment of the present application.
**Fig. 2** shows a schematic view of a motor of an improved electric power steering drive module according to an embodiment of the present application, wherein terminals for motor's three-phase windings are illustrated.
**Fig. 3** shows a schematic view of an improved electric power steering drive module according to an embodiment of the present application, wherein an ECU base is illustrated.
**Fig. 4** shows a side of an ECU circuit board assembly of an improved electric power steering drive module according to an embodiment of the present application.
**Fig. 5** shows a schematic view of another side of an ECU circuit board assembly of an improved electric power steering drive module according to an embodiment of the present application.
**Fig. 6** shows a schematic view of an improved electric power steering drive module according to an embodiment of the present application, wherein the ECU top-cover is not illustrated.
**Fig. 7** shows a schematic view of a guide of an improved electric power steering drive module according to an embodiment of the present application.
**Fig. 8** shows a schematic view of a guide of an improved electric power steering drive module according to an embodiment of the present application.

### DETAILED DESCRIPTION

Some embodiments of the present application are described below with reference to the accompanying drawings. It should be noted that the figures are not drawn to scale. Certain details may have been enlarged for clarity, and others that are not necessary to be shown are omitted.

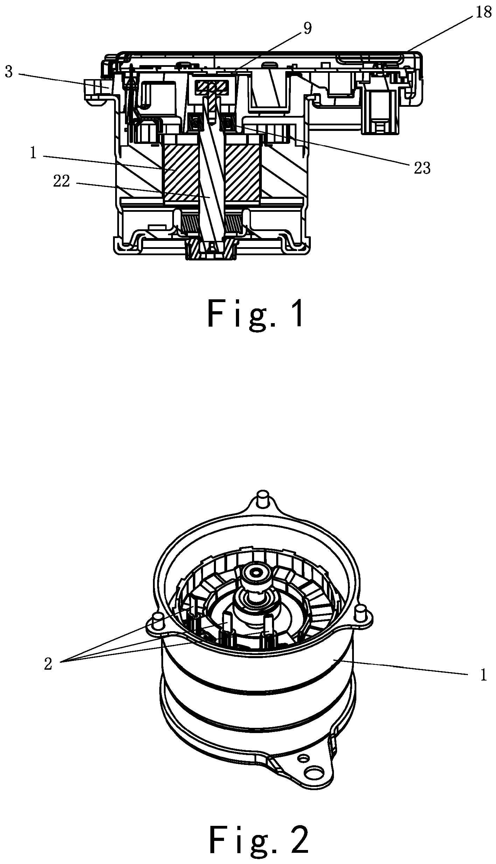

As shown in Figures 1 to 6, the present application discloses an improved electric power steering drive module comprising a motor 1, an electronic control unit (ECU) base 3, an ECU circuit board assembly 9, an ECU top-cover 18, and a magnet 21.

The motor 1 includes stator coils located therein. The stator coils may be connected with any suitable way (e.g., delta connection). The stator coils may lead to terminals 2 for motor's three-phase windings, as shown in Figure 2.

The ECU base 3 is secured to the motor 1 at the side of the motor 1 wherefrom the terminals 2 leading out of the motor 1.

The ECU base 3 includes a guiding recess 4 located therein, a magnet mounting through-hole 5, a capacitor mounting hole 6, an inductor mounting hole 7, and an ECU connector slot 8.

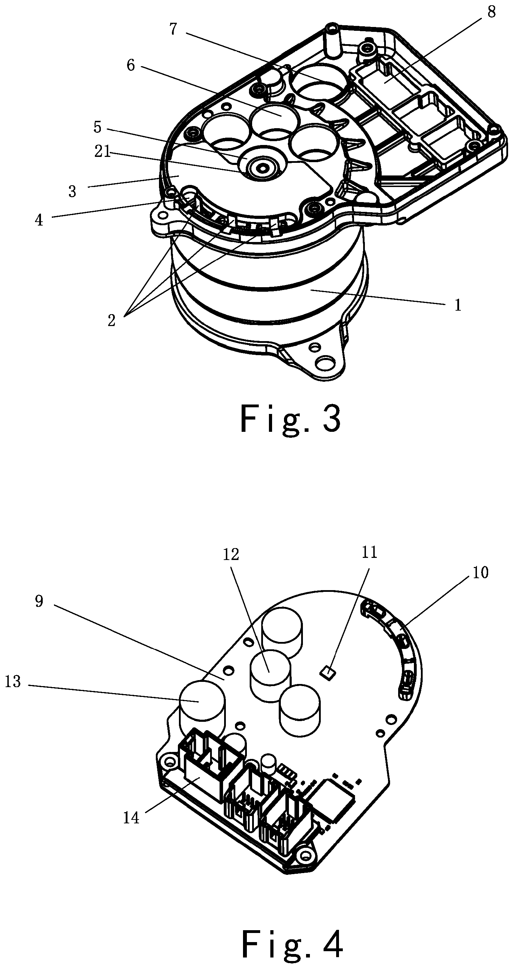

As shown in Figure 4, the ECU circuit board assembly 9 includes an ECU circuit board, a guide 10 fixed to the lower surface of the ECU circuit board, a Rotor Position Sensor (RPS) chip 11, a capacitor 12, an inductor 13, and an ECU connector 14.

The guiding recess 4 may be configured to be able to be fitted tightly with the guide 10.

The motor 1 further comprises a motor shaft 22 positioned at the center of the stator coils. The motor shaft 22 is configured to be able to pass through the magnet mounting through-hole 5 and able to have a magnet 21 thereon. The magnet 21 is positioned to be aligned with the RPS chip 11.

The capacitor 12 may be configured to be tightly mounted in the capacitor mounting hole 6. The inductor 13 may be configured to be fitted tightly in the inductor mounting hole 7.

The ECU connector 14 may be configured to be fitted tightly into the ECU connector mounting slot 8 such that the ECU circuit board assembly 9 is able to be mounted tightly on the ECU base 3.

The ECU connector 14 further is integrated with connection ports for whole vehicle Controller Area Network (CAN) signals, power supply, torque signals, etc. In this way, the overall structure is compact and easy to assemble.

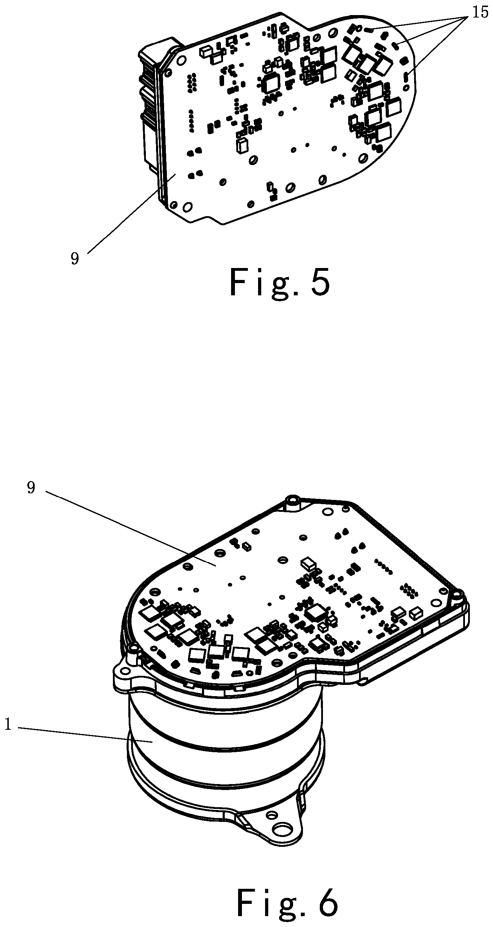

As shown in Figures 4 and 5, the ECU circuit board includes three motor pinholes (also called ECU current output interfaces) 15 provided thereon.

The guide 10 includes three pilot holes 16. The three motor pinholes 15 are respectively configured to be able to be connected to each of the three pilot holes 16 of the guide 10.

Ends of terminals 2 may be exposed from the ECU board assembly 9 by passing through the guiding recess 4, the pilot holes 16, and the motor pinholes 15 in sequence and respectively.

The terminals 2 are soldered to the motor pinholes 15 with solder joints (e.g. by tin soldering). In this manner, ECU-controlled three-phase power is able to be delivered from the motor pinholes 15, the solder joints, and the terminals 2 to the motor 1.

In the case that the motor's three-phase power is profiled as sine waves with time, a magnetic field with a certain rotation speed is formed inside the motor 1. This magnetic field will drive the motor shaft 22 to rotate for achieving motor power assistance.

The ECU top-cover 18 may be fixed to the ECU circuit board assembly 9 to protect the ECU circuit board assembly 9 and the terminals 2. Alternatively, the ECU top-cover 18 may be tightly secured to the ECU base 3 such that the ECU circuit board assembly 9 is protected between them.

Generally, for ensuring reliable soldering, the gaps around the oval holes for the terminals and the ECU current output interfaces need to be controlled to be within small ranges.

However, in practice, for ensuring a reliable assembly, an automatic production line is adopted for installing the ECU circuit board assembly. In this case, it is difficult for the terminals to pass through the motor pinholes since the gaps between the motor pinholes and the terminals are very small. One solution of the prior art is using controlled position tolerance and assembly process tolerance for the terminals to facilitate the terminals to pass through the ECU current output interfaces. However, this approach requires an additional process for motor pin position adjustment increasing scrap rates of parts and results in a significant cost increase.

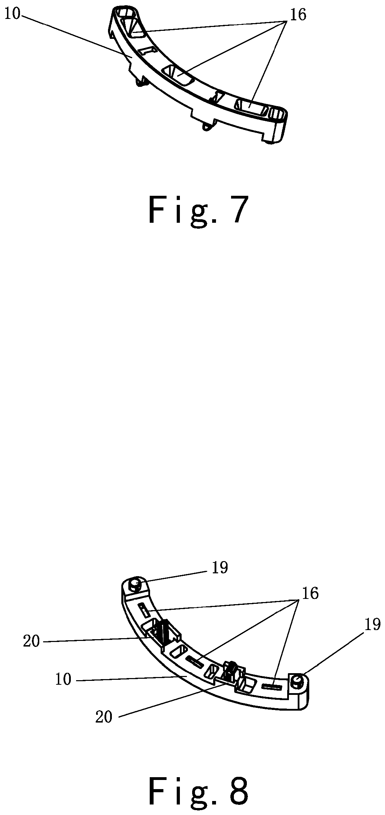

As shown in Figures 7 and 8, the guide 10 according to an embodiment of the present application is illustrated for solving the above problem.

The guide 10 may have the same shape as that of the guiding recess 4, in the shape of an arc.

The guide 10 includes fixing tabs 19 disposed at two ends of the backside thereof respectively.

The guide 10 also includes mounting support surfaces 20 located at the backside thereof and between the fixing tabs 19.

The guide 10 may be fixed to the ECU board with its backside using the fixing tabs 19 and the mounting support surfaces 20.

The guide 10 also includes three pilot holes 16 provided thereon. the pilot holes are spaced apart by the mounting support surfaces 20. The pilot holes 16 are through holes. The pilot holes 16 may have the same dimensions, sizes, and/or shapes as those of the ECU current output interfaces 15.

According to an embodiment of the present application, the pilot holes 16 are funnel-shaped. Optionally, the upper and/or lower openings of the funnel have oval cross-sections.

Due to the relatively large position tolerances and assembly tolerances of the terminals 2, the guide 10 shown in this application, in particular each pilot hole 16 of the guide 10 with funnel-shaped, may be adjusted for the terminals 2 such that in the case that there are deviations in the relative positions between the terminals 2 and the ECU current output interfaces 15, the terminals 2 follow the funnels of the guide 10 and pass through the ECU current output interfaces 15. In this way, a more advantageous soldering process for the terminals 2 and the ECU current output interfaces 15 is obtained.

In an embodiment of the present application, the ECU base 3 may be fixed to the ECU circuit board assembly 9; as an alternative, the ECU base 3 may be fixed to the bearings 23 of the motor.

In this way, the structure of the motor 1 is simplified and the device that would otherwise be required to install the motor bearing 23 can be omitted such that costs may be saved. Further, the overall size of the ECU and the motor 1 combined is reduced, which is advantageous to the layout of the whole vehicle.

As shown in Figures 3 and 4, in an embodiment of the present application, the magnet 21 is assembled at the end of the motor shaft 22; the RPS chip 11 is integrated on the ECU circuit board assembly 9.

The reading of angular error of the motor rotor angle by the RPS chip 11 is ensured by controlling the spacing between the magnet 21 and the RPS chip 11.

This arrangement saves the assembly space required for separate placement of the RPS sensor compared to the prior art and eliminates the need for parts to mount the RPS sensor in conventional ways, which in turn effectively reduces the cost for parts.

Although the present application is described herein with reference to specific embodiments, the scope of the present application is not limited to the details shown. Various modifications can be made to these details without departing from the scope of the claims.

## Claims

1. An electric power steering drive module comprising:
a motor (1) comprising a housing, stator coils disposed inside the housing, a motor shaft (22) disposed at the center of the stator coils, and motor three-phase terminals (2) leading from the stator coils towards a side of the motor (1) and being exposed outside the housing,
an electronic control unit base (3) fixed to the motor (1) at the side of the exposed terminals (2), wherein the electronic control unit base (3) includes a guiding recess (4), a magnet mounting through-hole (5), a capacitor mounting hole (6), an inductor mounting hole (7), and an electronic control unit connector slot (8) disposed therein,
an electronic control unit circuit board assembly (9) fixed to the electronic control unit base (3) at the opposite side of the motor (1) and includes an electronic control unit circuit board, and a guide (10), a Rotor Position Sensor chip (11), a capacitor (12), an inductor (13), and an electronic control unit connector (14) fixed to the lower surface of the electronic control unit circuit board; and
a magnet (21),
wherein the motor shaft (22) is configured to pass through the magnet mounting through-hole (5) **characterised in that** the magnet (21) is snapped onto the end of the motor shaft (22), and
wherein the capacitor (12) is configured to be tightly mounted in the capacitor mounting hole (6), the inductor (13) is configured to be tightly mounted in the inductor mounting hole (7), and the electronic control unit connector (14) is configured to be fitted tightly in the electronic control unit connector slot (8).

2. The electric power steering drive module according to claim 1 further comprising: an electronic control unit top-cover (18) fixed to the electronic control unit circuit board assembly (9).

3. The electric power steering drive module according to claim 1 further comprising: an electronic control unit top-cover (18) fixed to the electronic control unit base (3).

4. The electric power steering drive module according to claim 1, wherein the electronic control unit circuit board assembly (9) is fixed to the electronic control unit base (3) by the electronic control unit connector (14) being closely fitted to the electronic control unit connector slot (8).

5. The electric power steering drive module according to claim 1, wherein the magnet (21) is configured to be aligned with the Rotor Position Sensor chip (11), wherein the Rotor Position Sensor chip (11) obtains the angular error of the motor rotor angle by controlling the distance between the magnet (21) and the Rotor Position Sensor chip (11).

6. The electric power steering drive module according to claim 1, wherein the electronic control unit circuit board comprises three motor pinholes (15) and the guide (10) comprises three pilot holes (16), and wherein the three motor pinholes (15) are configured to be respectively aligned with each of the three pilot holes (16).

7. The electric power steering drive module according to claim 1, wherein the three ends of the terminals (2) are configured to pass through the guiding recess (4), the pilot holes (16) and the motor pinholes (15) respectively, for being exposed outside the electronic control unit circuit board assembly (9).

8. The electric power steering drive module according to claim 1, wherein the guide (10) comprises:
fixing tabs (19) disposed at two ends of the backside of the guide respectively; and
mounting support surfaces (20) disposed on the backside of the guide and positioned between the fixing tabs (19),
wherein the guide (10) is fixed with its backside to the electronic control unit circuit using the fixing tabs (19) and the mounting support surfaces (20).

9. An electrical power steering system comprising an electric power steering drive module according to any one of claims 1 to 8.

10. A vehicle comprising an electrical power steering system according to claim 9.

## Patentansprüche

1. Ein Antriebsmodul für eine elektrische Servolenkung, umfassend:
einen Motor (1), umfassend ein Gehäuse, Statorspulen, die innerhalb des Gehäuses angeordnet sind, eine Motorwelle (22), die in der Mitte der Statorspulen angeordnet ist, und dreiphasige Motoranschlüsse (2), die von den Statorspulen zu einer Seite des Motors (1) führen und außerhalb des Gehäuses freiliegen, eine Basis (3) für eine elektronische Steuereinheit, die an dem Motor (1) an der Seite der freiliegenden Anschlüsse (2) befestigt ist, wobei die Basis (3) für die elektronische Steuereinheit eine Führungsaussparung (4), ein Durchgangsloch (5) für die Montage eines Magneten, ein Montageloch (6) für einen Kondensator, ein Montageloch (7) für einen Induktor und einen darin angeordneten Anschluss-Steckplatz (8) für eine elektronische Steuereinheit umfasst, eine Leiterplattenbaugruppe (9) der elektronischen Steuereinheit, die an der Basis (3) der elektronischen Steuereinheit an der dem Motor (1) gegenüberliegenden Seite befestigt ist und eine Leiterplatte der elektronischen Steuereinheit, eine Führung (10), einen Rotorpositionssensorchip (11), einen Kondensator (12), einen Induktor (13) und einen Steckverbinder (14) der elektronischen Steuereinheit, der an der Unterseite der Leiterplatte der elektronischen Steuereinheit befestigt ist, umfasst; und einen Magneten (21), wobei die Motorwelle (22) so konfiguriert ist, dass sie durch das Durchgangsloch (5) für die Montage des Magneten verläuft, **dadurch gekennzeichnet, dass** der Magnet (21) auf das Ende der Motorwelle (22) angerastet ist, und wobei der Kondensator (12) so konfiguriert ist, dass er fest in dem Montageloch (6) für den Kondensator montiert ist, der Induktor (13) so konfiguriert ist, dass er fest in dem Montageloch (7) für den Induktor montiert ist, und der Steckverbinder (14) der elektronischen Steuereinheit so konfiguriert ist, dass er fest in den Anschluss-Steckplatz (8) der elektronischen Steuereinheit passt.

2. Das Antriebsmodul für eine elektrische Servolenkung gemäß Anspruch 1, weiter umfassend: eine obere Abdeckung (18) der elektronischen Steuereinheit, die an der Leiterplattenbaugruppe (9) der elektronischen Steuereinheit befestigt ist.

3. Das Antriebsmodul für eine elektrische Servolenkung gemäß Anspruch 1, weiter umfassend: eine obere Abdeckung (18) der elektronischen Steuereinheit, die an der Basis (3) der elektronischen Steuereinheit befestigt ist.

4. Das Antriebsmodul für eine elektrische Servolenkung gemäß Anspruch 1, wobei die Leiterplattenbaugruppe (9) der elektronischen Steuereinheit an der Basis (3) der elektronischen Steuereinheit befestigt ist, indem der Steckverbinder (14) der elektronischen Steuereinheit enganliegend in den Anschluss-Steckplatz (8) der elektronischen Steuereinheit eingepasst ist.

5. Das Antriebsmodul für eine elektrische Servolenkung gemäß Anspruch 1, wobei der Magnet (21) so konfiguriert ist, dass er zu dem Rotorpositionssensorchip (11) ausgerichtet ist, wobei der Rotorpositionssensorchip (11) den Winkelfehler des Motorrotorwinkels durch Steuern des Abstands zwischen dem Magneten (21) und dem Rotorpositionssensorchip (11) erhält.

6. Das Antriebsmodul für eine elektrische Servolenkung gemäß Anspruch 1, wobei die Leiterplatte der elektronischen Steuereinheit drei Motorstiftlöcher (15) umfasst und die Führung (10) drei Führungslöcher (16) umfasst, und wobei die drei Motorstiftlöcher (15) so konfiguriert sind, dass sie jeweils zu jedem der drei Führungslöcher (16) ausgerichtet sind.

7. Das Antriebsmodul für eine elektrische Servolenkung nach Anspruch 1, wobei die drei Enden der Anschlüsse (2) so konfiguriert sind, dass sie durch die Führungsaussparung (4), die Führungslöcher (16) und die Motorstiftlöcher (15) geführt werden, um außerhalb der Leiterplattenbaugruppe (9) der elektronischen Steuereinheit freigelegt zu werden.

8. Das Antriebsmodul für eine elektrische Servolenkung nach Anspruch 1, wobei die Führung (10) Folgendes umfasst:
Befestigungslaschen (19), die jeweils an zwei Enden der Rückseite der Führung angeordnet sind; und Montage-Stützflächen (20), die auf der Rückseite der Führung angeordnet und zwischen den Befestigungslaschen (19) positioniert sind, wobei die Führung (10) mit ihrer Rückseite an der Leiterplatte der elektronischen Steuereinheit unter Verwendung der Befestigungslaschen (19) und der Montage-Stützflächen (20) befestigt ist.

9. Elektrisches Servolenkungssystem mit einem Antriebsmodul für eine elektrische Servolenkung gemäß einem der Ansprüche 1 bis 8.

10. Fahrzeug mit einem elektrischen Servolenkungssystem gemäß Anspruch 9.

## Revendications

1. Un module d'entraînement pour une direction assistée électrique comprenant un moteur (1) comprenant un boîtier, des bobines de stator disposées à l'intérieur du boîtier, un arbre de moteur (22) disposé au centre des bobines de stator, et des bornes (2) triphasées de moteur partant des bobines de stator vers un côté du moteur (1) et étant exposées à l'extérieur du boîtier, une base (3) d'unité de commande électronique fixée au moteur (1) du côté des bornes (2) exposées, dans laquelle la base (3) d'unité de commande électronique comprend une cavité (4) de guidage, un trou de passage (5) pour le montage de l'aimant, un trou de montage (6) pour un condensateur, un trou de montage (7) pour un inducteur, et une fente (8) de connecteur pour une unité de commande électronique (8) disposée à l'intérieur, une ensemble (9) de carte de circuit imprimé de l'unité de commande électronique fixée à la base (3) de l'unité de commande électronique du côté opposé au moteur (1) et comprenant une carte de circuit imprimé de l'unité de commande électronique, un guide (10), une puce de capteur de position du rotor (11), un condensateur (12), un inducteur (13) et un connecteur (14) de l'unité de commande électronique fixé à la surface inférieure de la carte de circuit imprimé de l'unité de commande électronique ; et un aimant (21),dans lequel l'arbre du moteur (22) est configuré pour passer à travers le trou (5) de passage de montage de l'aimant, **caractérisé par le fait que** l'aimant (21) est encliqueté à l'extrémité de l'arbre du moteur (22), et dans lequel le condensateur (12) est configuré pour être monté serré dans le trou de montage (6) pour le condensateur, l'inducteur (13) est configuré pour être monté serré dans le trou de montage (7) pour l'inducteur, et le connecteur (14) de l'unité de commande électronique est configuré pour être monté serré dans la fente (8) du connecteur pour l'unité de commande électronique (8).

2. Le module d'entraînement pour une direction assistée électrique selon la revendication 1 comprenant en outre : un couvercle supérieur (18) de l'unité de commande électronique fixé à l'ensemble (9) de la carte de circuit imprimé de l'unité de commande électronique.

3. Le module d'entraînement pour une direction assistée électrique selon la revendication 1 comprend en outre: un couvercle supérieur (18) de l'unité de commande électronique fixé à la base (3) de l'unité de commande électronique.

4. Le module d'entraînement pour une direction assistée électrique selon la revendication 1, dans lequel l'ensemble (9) de la carte de circuit imprimé de l'unité de commande électronique est fixé à la base (3) de l'unité de commande électronique par le connecteur (14) de l'unité de commande électronique qui est étroitement ajusté à la fente (8) du connecteur pour l'unité de commande électronique.

5. Le module d'entraînement pour une direction assistée électrique selon la revendication 1, dans lequel l'aimant (21) est configuré pour être aligné avec la puce du capteur de position du rotor (11), dans lequel la puce du capteur de position du rotor (11) obtient l'erreur angulaire de l'angle du rotor du moteur en contrôlant la distance entre l'aimant (21) et la puce du capteur de position du rotor (11).

6. Le module d'entraînement pour une direction assistée électrique selon la revendication 1, dans lequel la carte de circuit imprimé de l'unité de commande électronique comprend trois trous (15) de goupille de moteur et le guide (10) comprend trois trous pilotes (16), et dans lequel les trois trous (15) de goupille du moteur sont configurés pour être alignés respectivement avec chacun des trois trous pilotes (16).

7. Le module d'entraînement pour une direction assistée électrique selon la revendication 1, dans lequel les trois extrémités des bornes (2) sont configurées pour passer à travers la cavité de guidage (4), les trous pilotes (16) et les trous (15) de goupille du moteur respectivement, pour être exposées à l'extérieur de l'ensemble (9) de la carte de circuit imprimé de l'unité de commande électronique.

8. Le module d'entraînement pour une direction assistée électrique selon la revendication 1, dans lequel le guide (10) comprend des pattes de fixation (19) disposées respectivement aux deux extrémités de la face arrière du guide et des surfaces de support de montage (20) disposées sur la face arrière du guide et positionnées entre les pattes de fixation (19), dans lequel le guide (10) est fixé sur sa face arrière au circuit de l'unité de commande électronique à l'aide des pattes de fixation (19) et des surfaces de support de montage (20).

9. Système de direction assistée électrique comprenant un module d'entraînement pour une direction assistée électrique selon l'une quelconque des revendications 1 à 8.

10. Véhicule comprenant un système de direction assistée électrique selon la revendication 9.
